# EUROPEAN PATENT APPLICATION

(11) **EP 2 775 408 A1**
(43) Date of publication of application: **10.09.2014**
(21) Application number: 13001149.7
(22) Date of filing: 07.03.2013
(51) Int. Cl.: G06F 17/30

(54) **Mobile device for identifying devices for technical maintenance**

(71) Applicant: ABB Technology AG, 8050 Zürich (CH)
(72) Inventor: Aleksy, Markus, 67071 Ludwigshafen (DE); Rissanen, Mikko, 564596 Singapore (SG); Stieger, Bernd, 68723 Plankstadt (DE)
(74) Representative: Kock, Ina

(57) **Abstract**

A mobile communication device and a computer program product and method are disclosed for operating the mobile device to identify a technical device for maintenance. A camera component (110) generates image data wherein the image data include an image of the technical device. A location sensor (120) provides data for determining a current location of the mobile phone. A direction sensor (130) provides direction data indicating a view direction of the camera component at the time of generating the image data. A data processing component (140) computes spatial coordinates of an environment of the current location of the mobile phone. A telecommunication component (160) submits to a technical device database a query for technical devices located in the environment, and further receives from the technical device database, in response to the query, maintenance data for technical devices having location data matching the query. The data processing component (140) associates the technical device with the image of the technical device using direction data provided by the direction sensor wherein the direction data indicates a view direction of the camera component at the time of generating the image data. An output component (170) displays received maintenance data together with the image data wherein the received maintenance data is arranged to indicate that the received maintenance data relate to the technical device.

## Description

The present invention generally relates to mobile devices with telecommunication capabilities and enhanced computing capabilities, and more particularly, relates to methods, computer program products and mobile phones for technical maintenance support.

Technical facilities, such as plants, usually continuously require the execution of maintenance tasks for technical equipment of the facilities. Maintenance personnel represent a mobile work force in the sense of the personnel typically being required to perform maintenance activities at the location of the technical equipment. For example, maintenance activities include industrial service and repair operations. To prepare for a maintenance task, the maintenance personnel need to know all relevant data regarding a specific piece of equipment to be maintained. Such data will be referred to as maintenance data hereinafter. For example, maintenance data can include information about: the current location of the equipment, the current operational status of the equipment, maintenance activities performed in the past, maintenance activities to be performed in the future, material or tools which are needed for performing the maintenance, or any other additional information characterizing the maintenance status of a respective technical device, which is part of the technical equipment of the facilities.

Maintenance personnel, such as field engineers, typically use paper charts and electronic documents from various data sources that describe what has been done to a technical device (e.g., a piece of machinery to be maintained). Work orders may be used to describe what is to be done now and in the future. Planners perform the planning and scheduling of work orders needed for maintaining the technical devices. Prior art work force management systems (e.g., VENTYX provided by ABB Asea Brown Boveri Ltd) include electronic work orders.

However, there are many different information sources. The plurality of information sources is an obstacle to the efficient technical maintenance of technical devices. Moreover, transmitting the information often involves a break in the communication medium (media breaks).

Therefore, there is a need to improve mobile communication devices as a technical tool supporting maintenance personnel in their technical task of maintaining technical devices more efficiently. Embodiments of the invention as described in the independent claims solve this technical problem by eliminating media breaks and dynamically merging all relevant technical information (maintenance data) in a single technical tool supporting the maintenance personnel.

In one embodiment, a mobile device with telecommunication capabilities (also referred to as mobile device hereinafter), such as for example a mobile phone (e.g., a smartphone) or a tablet computer with telecommunication capabilities for wireless data exchange is configured to identify a technical device for maintenance. For example, the technical device can be placed in a technical facility and a service technician entering the facility and carrying the mobile device can use a camera component of the mobile device (e.g., smartphone) to take a picture or video of the facility from her current location. Taking a picture or video in this context does not necessarily require the persistent storage of the respective data. In this context it also refers to simply activating the camera mode of the device to generate image data on the display component of the device, which corresponds to the current camera view. The image data can include an image of the technical device which is subject to maintenance activities by the service technician.

The mobile device further has a location sensor which provides data for determining a current location of the mobile phone. Location sensors known in the art are, for example, GPS (Global Positioning System) sensors for outdoor location sensing or sensors based on triangulation techniques, which may also be used for indoor location sensing. Any other location sensing technique known by the person skilled in the art can be used instead. The current location can be specified by geo-coordinates or by relative coordinates in relation to a given anchor point (e.g., main entrance of the respective facilities).

The mobile device further has a direction sensor which provides direction data indicating a view direction of the camera component at the time of generating the image data. Typical direction sensors used in smartphones are so called compass sensors. Any other sensor technology to sense the viewing direction of the camera can be used instead.

Further, the mobile device has a data processing component being configured to compute spatial coordinates of an environment of the current location of the mobile device. In one embodiment, the environment can be calculated as a circular area around the current location of the mobile device by using a given radius. The radius may be predefined or configurable by the user (service technician). In another embodiment, the environment may have a deliberate geometric shape (e.g., square, rectangle, ellipse, etc.) with the respective geometric parameters in relation to the current position of the mobile device being predefined or user configurable. In yet another embodiment, the mobile device may store a floor plan of the facilities and the processing component computes the current location of mobile device in relation to the floor plan. The respective environment can then be calculated as the area of the specific room or hall enclosing the current location of the mobile device. In other words, the respective environment can be regarded as the spatial vicinity of the mobile phone / device.

Further, the mobile device has a telecommunication component, which allows wireless communication with other telecommunication devices. Telecommunication in this context is meant to include any kind of telephone standard based communication (e.g., UMTS, LTE, etc.) but also any other kind of wireless communication, such as for example communication through wireless local area networks (WLAN). The telecommunication component can submit a query for technical devices located in the environment to a technical device database. The query can be composed by a query generator of the mobile device by using the result of the environment computation.

The technical device database can communicate with the mobile device through the telecommunication component and includes information about the technical devices being located in the facilities. That is, also the information about technical devices being located in the environment specified in the query received from the mobile device is available in the technical device database. Besides location information for each technical device the technical device database can include all relevant maintenance data for the respective devices. Once the technical device database receives the query, it will execute the query to retrieve all technical devices having location data matching the query. In other words, the execution of the query delivers all technical devices which are located in the environment of the mobile device as specified in the query. Further, all relevant maintenance data for the respective technical devices may be retrieved from the technical device database. The query result is then sent back to the mobile device in response to the query.

As a result the mobile device receives the maintenance data for all technical devices being located in its current environment. The received technical device data and respective maintenance data are stored in the mobile device and are available from this time on without further communication through the telecommunication component. That is, after having received the maintenance data from the technical device data base the mobile device can also work in an off-line mode without a need for further data exchange.

The data processing component is further configured to associate the technical device with the image of the technical device using direction data provided by the direction sensor, wherein the direction data indicates a view direction of the camera component at the time of generating the image data. That is, based on the view direction of the camera which is derived from the direction data, the mobile device can calculate the spatial coordinates covered by the viewing angle of the camera. The viewing angle is known by the system as it depends on the focal length of the camera optics which is built into the camera component. The data processing component can then determine which of the received device/maintenance data relates to technical devices having location data enclosed by the spatial area covered by the viewing angle of the camera. This is achieved by comparing the spatial coordinates which are associated with the viewing angle of the camera (a subset of the spatial coordinates associated with the environment) to the spatial coordinates of the technical devices for which the maintenance data were received. Based on the coordinates of the technical devices in the spatial area corresponding to the viewing angle, the data processing component can calculate where the respective images of the technical devices can be found on the image data taken by the camera. A person skilled in the art can apply respective geometric transformations to identify the images of the technical devices in the image data. Known methods in this field are, for example, the Quarter Degree Grid Cells (QDGC) method or the C-squares (concise spatial query and representation system) method. In other words, the camera supplies images of the vicinity of the mobile device, the processing component processes current location data, current direction data, current camera data and received database data to identify portions of the image that correspond to the technical device.

The mobile device further has an output component, which includes the display of the mobile device. The output component is configured to display the received maintenance data together with the image data in such a way that graphical representations of the received maintenance data is visually arranged on the display to indicate that the received maintenance data relate to the technical device. For this purpose visual representations of the respective maintenance data can be merged into the image data in the proximity of the image of the respective technical device.

In case multiple technical devices are identified inside the spatial area covered by the viewing angle, a selection component of the mobile device may be used to select a subset of the received maintenance data for being displayed by the output component. The subset of the received maintenance data relates to the subset of technical devices being located in the viewing angle of the camera component at the time of generating the image data. In cases where the mobile device has a relatively small display size and/or display resolution it may be advantageous to select only one technical device to avoid crowding the display space with maintenance data which can hardly be associated with the images of multiple technical devices. In such a case the selection component may select such the maintenance data which is associated with the technical device having the shortest distance from the mobile device. To calculate the distance between the mobile device location and the technical device locations distance calculation methods such as great-circle distance, Haversine formula, or Vincenty's formulae may be used.

In another embodiment, the mobile device may have additional sensor capabilities such an RFID (radio frequency identifier) reader, a barcode reader or a NFC (near field communication) reader. Such sensors may be used to identify a technical device which is equipped with a respective tag. The selection component may then select the received maintenance data which is associated with the technical device associated with the identifier received from the respective technical device.

In another embodiment, the mobile device may include an image recognition component configured to apply an image recognition algorithm on images of technical devices for technical device identification. For example, the mobile device may recognize characterizing points of the technical device and compare the associated pattern with respective device image data. The device image data can be stored in the technical device database and be retrieved via the telecommunication component or they may be stored in the memory of the mobile device allowing offline operation. The selection component can then select the maintenance data associated with the technical devices identified via image recognition methods. Such image recognition methods are well known by the person skilled in the art. Image recognition can be divided into various fields. For example, image preparation includes the correction of image errors, image improvement based on pixel operation, and local and global operations. Subsequently, image segmentation and feature extraction can be applied. Then, pattern recognition and methods for pattern interpretation are applied. Algorithms are known in each of the various fields. Examples of such algorithms are: Laplace, Region-Growing, Region-Splitting, Fuzzy-Cluster methods, k-Means algorithm, and Walz algorithm.

In some maintenance scenarios the mobile device may not be able to receive telecommunication signals at the location where the maintenance activities are supposed to be executed. To enable offline operation of the mobile device it may further include a prefetch component which is configured to retrieve via the telecommunication component maintenance data of technical devices for a plurality of potential environments of the mobile device. The prefetch retrieval is independent from the current location of the mobile device and can be performed at any time when a corresponding connection is available. The prefetched maintenance data is then stored in the mobile device and becomes available for off-line operation. For example, the plurality of potential environments can be defined by a list of points of interest which includes locations typically visited by the service technician in the course of performing the maintenance activities during a day.

In another embodiment, the mobile device can include a filter component which is configured to filter the received maintenance data in accordance with a maintenance user profile stored on the mobile device so that only the filtered maintenance data is displayed by the output component. The maintenance user profile can include information about specific technical skills of the service technician. For example, the filter component can match such skills with the service activities to be performed for the respective technical device. Displaying only such maintenance data matching the user's profile allows the user to retrieve the relevant information more efficiently.

In one embodiment, the maintenance data may include various maintenance data categories, such as for example historical maintenance data, present maintenance data, and future maintenance data. The various maintenance data categories may have distinguishable visualization properties. For example, the visualization properties may include information about colors, size, or display location.

Other embodiments of the invention include a method executed by the mobile communication device to perform the above described behavior and a computer program product which can be executed by a processor of the mobile device to execute the method.

Further aspects of the invention will be realized and attained by means of the elements and combinations particularly depicted in the appended claims. It is to be understood that both, the foregoing general description and the following detailed description are exemplary and explanatory only and are not restrictive of the invention as described.
FIG. 1 is a simplified system architecture of a mobile communication device communicatively coupled with a backend system according to one embodiment of the invention;
FIG. 2 is a flowchart illustrating a method executed by the mobile communication device;
FIG. 3 illustrates the use of the mobile communication device in a technical facility for maintenance purposes;
FIG. 4 is an example of a display generated according to an embodiment of the invention; and

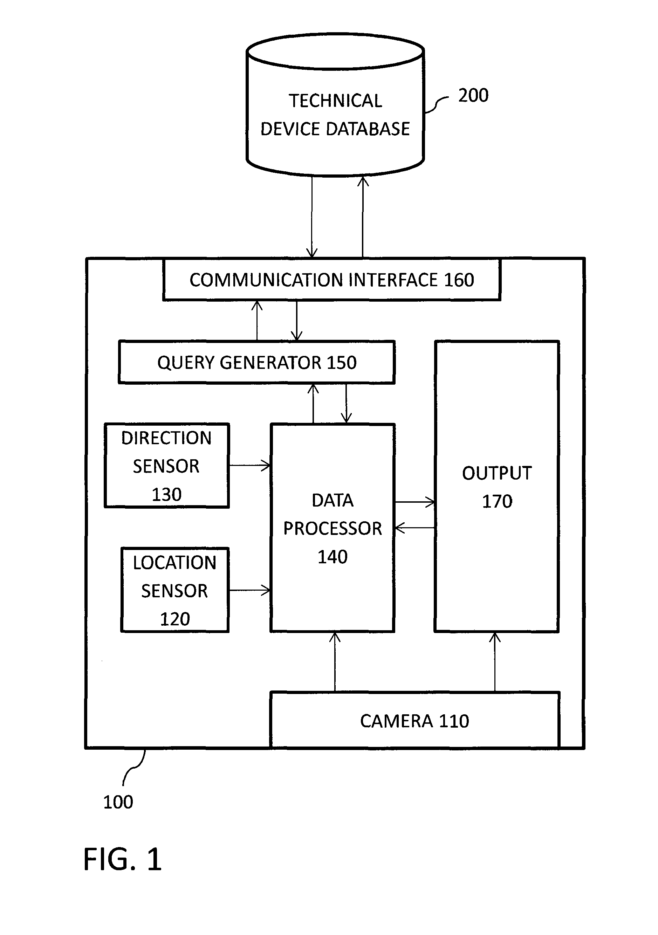

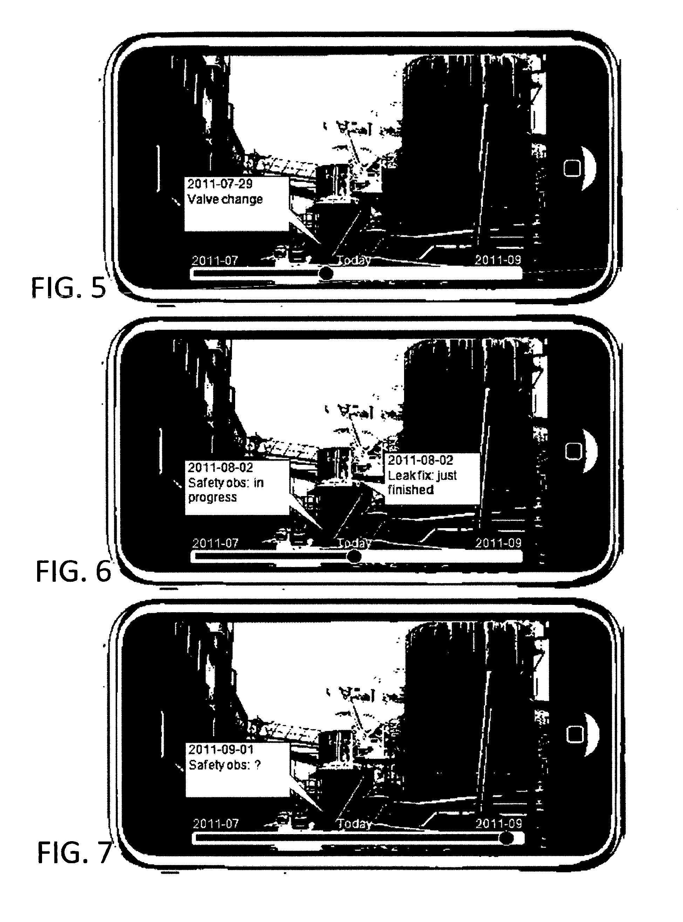

FIGs. 5, 6, 7 show further examples of displays of the mobile communication device according to embodiments of the invention. FIG. 1 is a simplified system architecture of a mobile communication device 100 communicatively coupled with a backend system 200 according to one embodiment of the invention. The mobile communication device can be a mobile phone having additional computing and output capabilities. Such mobile phones are often referred to as smartphones. Further, there are tablet computers with telecommunication capabilities or other similar mobile communication devices with telecommunication capabilities, which may also be configurable according to embodiments of the invention.

The mobile communication device 100 can be used to identify technical devices for maintenance to support a user (e.g., a service technician) in fulfilling her technical maintenance or repair tasks for technical devices, which are part of the technical equipment in a technical facility. such as for example, a production plant, a warehouse, a research and development facility, an office building, or any other facility which makes use of any technical equipment or technical infrastructure.

The mobile communication device 100 includes a camera component 110. Typically, such camera components include camera optics and digital means to generate image data which can be displayed on a respective output component 170 of the mobile device 100. For example, the output component 170 can include a pixel-oriented display. Often touch sensitive displays are used, which allow the user to interact with the output component in a way that the display also functions as a touch sensitive user input device. In a maintenance scenario, the image data is generated from a camera view of the technical facility. Therefore, the image data likely includes images of one or more technical devices being located in the technical facility.

The mobile device 100 further includes a location sensor 120. The location sensor 120 can provide data for determining the current location of the mobile device 100. For example, such data can be GPS coordinates obtained from a GPS sensor in case of outdoor usage. There are also location sensors for indoor usage, which can provide location data based on triangulation methods using, for example, the signals of WLAN routers or cells of a mobile phone network.

The mobile device 100 further includes a direction sensor 130. The direction sensor can provide direction data indicating the view direction of the camera component 110. In other words, sensor 130 is a sensor for a camera view direction. Commercially available compass sensors can be used for such purpose. By using a direction sensor 130 at the time of generating the image data the mobile device 100 can determine the real world direction at each point in time at which the camera is looking while generating the image data. In other words, simultaneously with the camera taking images from the technical equipment, the direction sensor 130 can provide direction data of the camera.

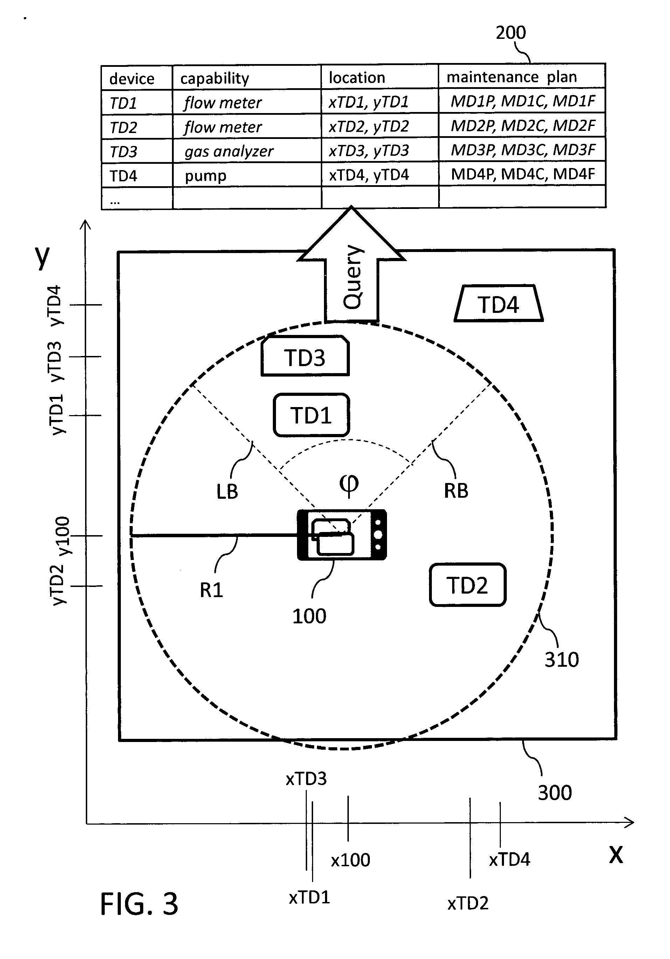

The mobile device 100 further includes a data processing component 140 which can further process the direction data and location data being provided by the respective sensors 130, 120. For example, based on the current location of the mobile device, the data processor 140 can compute spatial coordinates of an environment of the current location of the mobile device. More details are explained in the description of FIG. 3.

The mobile device 100 further includes a telecommunication component 160 having a wireless communication interface which is able to communicate with the backend system 200. The backend system 200 includes a technical device database, which stores data about the technical devices located in the facility. In the context of embodiments of the invention such data are relevant for performing maintenance activities for the respective devices and are, therefore, referred to as maintenance data hereinafter. Maintenance data can include information about the type of the device, its capabilities, its location, and data about maintenance activities in the past, at present or in the future. Any other maintenance relevant information, such as instruction manuals, operation videos, or images of the technical device may be stored as well in the technical device database.

A query generator 150 may be used to compose a query for technical devices located in the environment of the current location of the mobile device 100. The query generator 150 may also be part of the data processor 140. The query is submitted to the technical device database 200 through the telecommunication component 160. The technical device database 200 can execute the query and provide in response to the query the maintenance data for all technical devices having location data matching the query. The response is sent back to the mobile device 100 and received by the communication interface 160.

The data processing component 140 can then use the received maintenance data to associate each technical device in the environment with the image of the technical device. For this purpose the data processor 140 can perform geometric translations using the received location data (as part of the respective maintenance data) for each device in relation to the current location of the mobile device by further using the direction data provided by the direction sensor. The result of such geometric calculation is a transformation of the geo-coordinates specifying the location of the respective device in the facility into the camera image data expressed in coordinates of the camera display. For example, each technical device for which maintenance data has been received and which is located in the current camera view can be represented by a graphical icon which is displayed in the proximity of the image of the respective technical device. Further details are explained in the description of FIG. 3.

In one embodiment, the mobile device 100 further may include a prefetch component (not shown). The prefetch component can be configured to retrieve maintenance data of technical devices for a plurality of potential environments of the mobile device via the telecommunication component 160. The prefetch retrieval of maintenance data in this embodiment is independent from the current location of the mobile device and the prefetched maintenance data is stored in the mobile device for off-line operation. More details are disclosed in the description of FIG. 3.

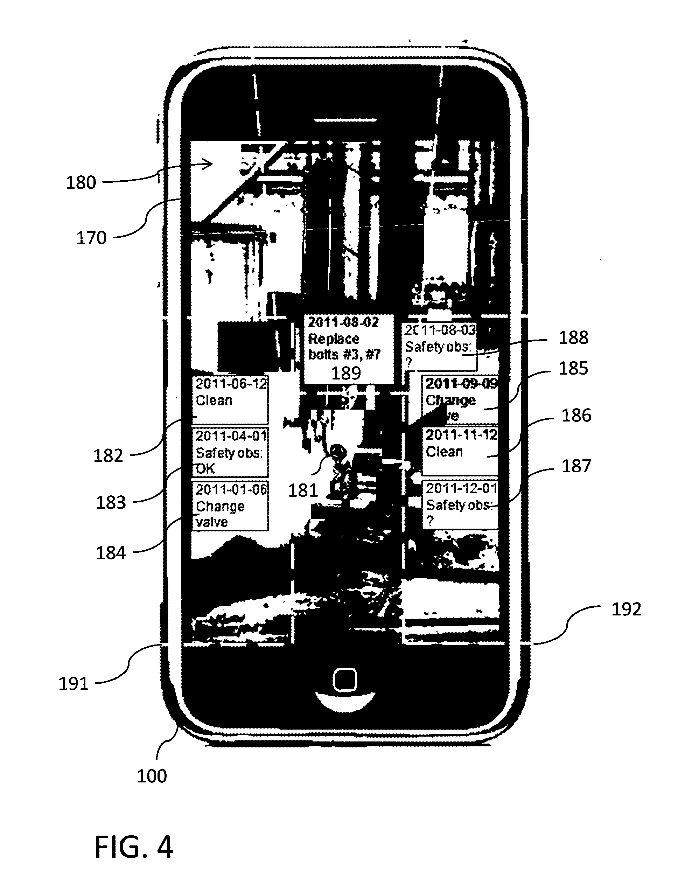

Further, the output component 170 (display) can display the received maintenance data of the respective technical devices, that is, such technical devices having an image representation in the display of the current camera view, together with the image data. For example, the maintenance data can be shown as an overlay on the image data. Thereby, the received maintenance data is arranged to indicate that it relates to a respective technical device. Details about how to arrange the maintenance data are shown in FIGS. 4 to 7. In addition to the display function the output component may also support audio outputs. For example, maintenance data for a technical device which has an image representation in the display may also be transformed into audio messages, which can be conveyed to the user by a loudspeaker component of the mobile device 100. For example, the user may take a snapshot of the spatial area in front of her. Using the direction data and location data the mobile device can generate icons indicating the technical devices shown on the display. In case of a snapshot the image can be frozen and the user may now put the mobile device aside after having selected an icon representing the technical device of interest for the user. Having an audio output can be advantageous as the maintenance data may now be read to the user who can perform a visual inspection while listening to the maintenance data. In other words, the user can already focus on the technical maintenance activities while benefiting from the maintenance data provided by the mobile device without being visually distracted.

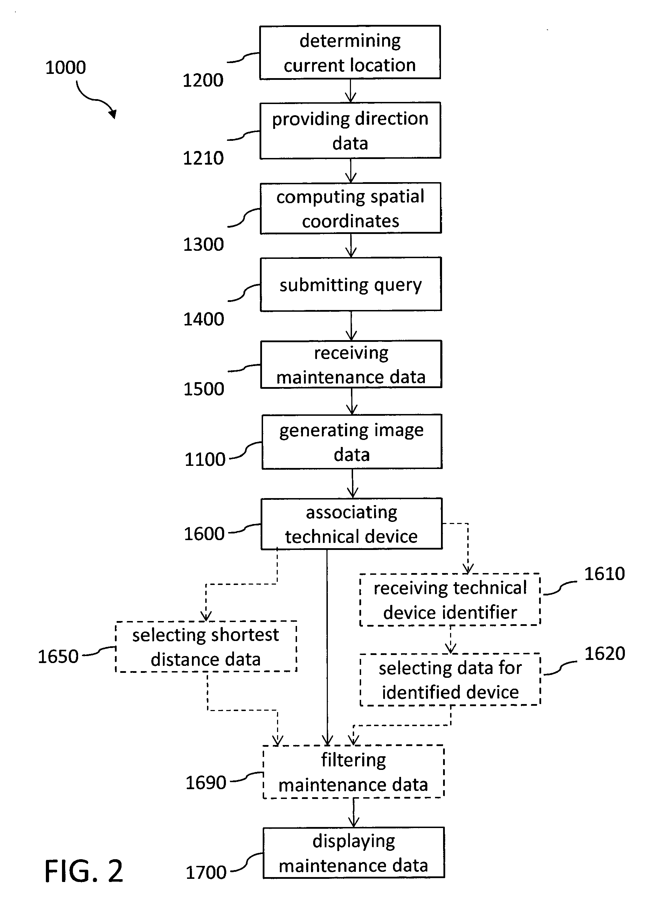

FIG. 2 is a flowchart illustrating a method 1000 for identifying a technical device for maintenance executed by the mobile communication device 100. The steps of the method can be performed by the components of the mobile device 100 as described under FIG. 1. Therefore, features described already above will only shortly be summarized in the context of the method description.

The method includes determining 1200 a current location of the mobile device based on data provided by a location sensor of the mobile communication device. Further, spatial coordinates of an environment of the current location of the mobile device are computed 1300. The mobile device then submits 1400 a query for technical devices located in the environment to a technical device database. The technical device database can be stored on any remote storage device which is enabled to remotely communicate with the mobile device. Typically, the technical device data base is part of a so called backend system providing administrational tools for the administration of the technical equipment of the facility. In response to the query the mobile device receives 1500 maintenance data from the technical device database for the technical devices having location data matching the query. That is, after the receiving step 1500 the mobile device stores information which is relevant for maintenance of the technical devices being located in the computed environment of the current location of the mobile device. A camera component of the mobile device generates 1100 image data of a part of the facility. The image data correspond to what can be grabbed by the viewing angle of the camera. The image data include images of such technical devices which are located within the viewing angle of the camera. The image data generation step 1100 can basically take place at any time. It can even be performed before determining 1200 the current location of the mobile device. In other words, method steps can be performed in alternative orders or in parallel. The mobile device then associates 1600 the technical device with the image of the technical device by using direction data provided by the direction sensor of the mobile device. The direction data indicates the view direction of the camera component at the time of generating the image data. In combination with its current location data the mobile device can estimate the display coordinates of the image data of a technical device on the mobile device display based on the location data of the technical device received from the technical device database. The received maintenance data associated with technical devices being located in that part of the environment which is associated with the camera view can then be displayed 1700 together with the image data. It may be advantageous to arrange the displayed maintenance data associated with a specific technical device in a way which indicates that the maintenance data relates to the respective specific technical device. Such an arrangement is advantageous for the service technician in that the relevant maintenance can be immediately recognized as the relevant information for the user's object of interest (technical device to be maintained).

In case that the mobile device has a relatively small display size, the display of too much maintenance data may be confusing to the user. The following optional embodiments (indicated by dashed frames) can provide solutions to this problem. It may be advantageous to restrict the amount of displayed information to such an extent that the user can quickly relate the relevant information to the object(s) of interest. For such purposes, where for example the displayed image data includes images of at least two technical devices, the mobile device in one embodiment may select 1650 for the displaying 1700 step such received maintenance data which is associated with the technical device having the shortest distance from the mobile device. Methods for calculating the shortest physical distance have been mentioned earlier.

In another embodiment, the mobile device may include a reader sensor which is able to receive an identifier of a respective technical device. Such identifiers can be attached to the respective technical device for example in the form of an RFID tags, bar codes or NFC coded information. A corresponding reader sensor can then receive this identifier when the user moves towards the technical device which is shown in the camera image data on the display and performs a corresponding reading operation. Once the identifier is received of any one of the displayed technical devices for which received maintenance data is available the mobile device can select 1620 such received maintenance data which is associated with the technical device associated with the identifier for the displaying 1700 step.

In a further embodiment, the mobile device may apply an image recognition algorithm on the displayed images of the technical devices to identify the technical devices. Such an algorithm may recognize characteristic points of the image. Comparing such characteristic points with image reference patterns being associated with the technical devices finally leads to the identification of the devices. The reference patterns may be stored in the technical device database accordingly. In this case, a communication with the backend is established providing the recognized image pattern to the backend where the comparison with the reference patterns is made. In case of a match, the identified technical device is reported back to the mobile device. The reference patterns may even be stored in the memory of the mobile device. In this case, a communication with the backend is not required. The comparison with the reference patterns can be directly performed by the mobile device in an offline mode, thus, leading to the identification of the respective technical devices. The mobile device then selects the maintenance data associated with the identified technical devices, respectively, for the displaying step. The user may indicate her object(s) of interest by a touch interaction with the display (e.g., by touching on the icon representing the object of interest). In this case, the mobile device may only select the maintenance data for the selected object of interest for display.

For a service technician it may be of interest to distinguish the maintenance data according to maintenance data categories, such as for example, historical maintenance data, present maintenance data, and future maintenance data. That is, for efficient technical maintenance it may be relevant for the user to know about the maintenance data history of the object of interest as well as to know about the current and future maintenance activities. Therefore, it can be advantageous for better supporting the technician in the fulfillment of her technical task to arrange the maintenance data on the display according to the various maintenance categories. This can be achieved by associating maintenance data with a corresponding maintenance data category and further associating each maintenance data category with a visualization property that is distinguishable from other visualization properties. Visualization properties can be, for example, display colors or display locations. Various embodiments of using visualization properties for optimized display are shown in FIGs 4 to 7.

Anyone of the above selection steps may also influence an audio output of the maintenance data accordingly. For example, maintenance data belonging to a specific maintenance data category can be read in one sequence headed by a corresponding header announcing the respective category.

In one embodiment, the mobile device may apply a filtering step 1690 to the selected maintenance data before the data is displayed to the user. The filtering may be based on a user profile stored on the mobile device. For example, when a user is recognized by the mobile device (e.g., thorough a login procedure), the mobile device may associate a user profile with the current user which describes the skill set of the user. The filtering 1690 can ensure that only maintenance data is displayed which match the user's skill profile. More details are explained in the description of FIG. 3.

FIG. 3 illustrates the use of the mobile communication device 100 in a technical facility 300 for maintenance purposes.

In a standard service process a service person visits the technical facility, e.g., a customer site, in order to cope with a customer maintenance request. "Service person" is to be understood in this description as a synonym for maintenance technician. Depending on the request the service person may have a certain skill set. In general, service persons can perform different roles, e.g., safety manager, maintenance engineer, commissioning engineer, or reliability engineer.

In one example, the customer site deals with waste water treatment. It may be necessary to control, monitor, and measure certain values and signals of the liquid transportation and gases evolving from the plant 300. In case there are suddenly huge signal deviations a recalibration of flow meters (e.g., technical devices TD1, TD2) might be necessary. Then, the customer may request a service engineer that is specialized in corrective maintenance and calibration, for example, a maintenance engineer. The focus and the expertise of this maintenance engineer in the example purely related to flow measurement products. However, in a waste water treatment site there are several other products installed such as gas analyzers TD3, pumps TD4, filter systems (not shown), and other process controllers not dealing with flow measurement (not shown). Thus, due to the high number of available and usually small technical devices at the plant 300 it is critical to exactly identify only the relevant flow measurement products that need to be checked and possibly calibrated by the maintenance engineer. In other words, the service person might be confused by the number of technical devices in the vicinity, but the mobile device 100 provides a technical support tool to identify the appropriate device that is subject to technical measures.

The maintenance engineer is carrying the mobile communication device 100 when entering the plant 300. Using its location sensor the mobile device can compute its current location coordinates (x100, y100). The maintenance engineer may specify a radius of interest R1 defining a circular area 310 as the environment in which potential technical devices for maintenance may be located. In the example, environment 310 does not cover the full plant floor plan 300. Alternatively, the mobile device could use a predefined radius for computing the environment. Any other geometric shape or the floor plan itself may be used to define the environment. The environment 300 can be expressed in a range of geo-coordinates including the coordinates for each spatial position within the environment 300. With regards to the technical devices TD1 to TD4 in plant 300 only the technical devices TD1 to TD3 have location coordinates (TD1: (xTD1,yTD1); TD2: (xTD2,yTD2); TD3: (xTD3,yTD3)) within the environment 310; TD4 (TD4: (xTD4,yTD4)) is outside the environment. Therefore, when the mobile device submits the query for technical devices within the environment to the technical device database 200, the response includes the maintenance data for the technical devices TD1 to TD3 matching the query. Besides data regarding the maintenance plan or maintenance schedule for the respective device, further information, such as capability data and location data of the respective device, may be received by the mobile device. The maintenance plan for each device may include historic data of previous maintenance activities (MDnP), information about current maintenance activities (MDnC) and data regarding future maintenance activities (MDnF), wherein n represents the device number (1 to 4). The received maintenance data is now available on the mobile device. The user may now use the camera component of the mobile device to generate image data of the plant 300 on the display of the mobile device. In the example, the view direction of the camera is in the direction of the y-axis. The image data of the camera can cover a certain viewing angle ϕ which has a left border LB and a right border RB.

By using the direction sensor of the mobile device the device can calculate the coordinates of the locations within the part of the environment corresponding to the viewing angle ϕ. The mobile device can now compare the location coordinates of the technical devices for which maintenance data was received and identify such devices which are located in environment corresponding to the viewing angle. In the example, only the devices TD1 and TD3 are selected. Based on the location coordinates of TD1 and TD3 the mobile device can determine the position of the images of TD1 and TD3 in the image data of the camera. To support the user in identifying the respective technical devices on the camera display the mobile device can generate a respective graphical representation in the image data. For example, an icon or text symbolizing a flow meter may be generated at the display location of the image of TD1 and an icon or text symbolizing a gas analyzer may be generated at the display location of the image of TD3. The user can do a quick scan of the whole environment by simply turning around at the current location (x100, y100). When the view direction is close to the direction of the x-axis the user will discover that there is a second flow meter TD2 in the environment 310 which also needs to be checked. Turning back the view to TD1 the mobile device may recognize that TD1 is closer to the user than TD3 and automatically display details of the maintenance data of TD1 on the mobile device display. Other selection methods for the technical device as explained earlier can be used alternatively.

In an embodiment where the mobile device includes a filtering component as described earlier, the mobile device could automatically filter out TD3 because the skill profile of the user is related to flow measurement products and TD3 is a gas analyzer where the user is not competent to provide maintenance. Therefore, the automatic elimination of any data regarding TD3 allows the user to more efficiently focus on the relevant information. For example, when using the filtering component, TD3 may not even be tagged by any graphical representation in the image data and the user would not even recognize that it is a technical device.

After the identification of the flow meter TD1, the user can connect a laptop to the device and check the current settings. If there is no deviation compared to the standard settings, the user can continue the diagnosis at the remaining flow meter TD2. In case a deviation is detected, there is a need to recalibrate the device TD1. It may be important for the user to get the information about dates and times from the initial and last calibrations in order to conclude certain causes for emerging signal deviations. To support this information need, the mobile device may automatically arrange the required information in appropriate manner in the proximity of the image of the flow meter TD1. Advantageous arrangements are shown in FIGs. 4 to 7.

In an embodiment where the mobile device includes the prefetch component for prefetching of data from the technical device database 200, the mobile device can support prefetching to allow offline operation. For example, an information package related to points-of-interests (POIs) such as installed technical devices located in a pre-defined range, e.g., 500 meters or a specific list of POIs (e.g., a list of rooms or even a list of technical devices that need to be serviced) may be preloaded/prefetched on the mobile device. The package can contain all relevant information for offline access. In the example, maintenance data for the technical devices TD1 to TD4 may be retrieved in case the plant 300 is a POI in the above sense. The required information can be extracted from backend systems and locally stored on the mobile device. Information updates can thus be stored locally on the mobile device while there is no connectivity to the backend systems. After connectivity to the backend systems is re-established, the information can be synchronized again:

FIG. 4 is an example of display image data 180 generated according to an embodiment of the invention. The mobile device 100 in the example is a conventional smartphone having a display output component 170 which is typically a touch screen interface that can be used as an input device by the user by touching the screen and performing gestures. Interaction patterns can be similar to what the skilled person knows from APPLE's iOS operating system or GOOGLE's ANDROID platform. In the example, the image data 180 includes the image 181 of a flow controller. The flow controller may correspond to the flow controller TD1 (cf. FIG. 3). Once the mobile device has recognized the flow controller image 181 according to the method disclosed previously, the mobile device can merge the received maintenance data for the flow controller into the image data 180. The example shows an advantageous arrangement of the maintenance data. The user immediately can conceive immediately which data of previous maintenance data/activities may be relevant to the current repair/service activity to be performed. In the example, maintenance data/activities of the past are represented on the left to the image 181. For example, such maintenance data can be tagged with a visualization property position:left. The graphic representations 182 (June 2011), 183 (April 2011), 184 (January 2011) are arranged according to the historic occurrence, wherein the earliest event is shown at the bottom. In other words, data relating to sequentially occurring events is arranged at screen locations arranged accordingly. For example, a corresponding visualization property position:left:bottom can be associated with the graphic representation 184 whereas the visualization property of the graphic representation 183 and 182 may be position:left:center and position:left:top, respectively. Similar visualization properties can be associated for the other graphic representations to influence the positioning of the display. Visualization properties can have a hierarchical structure as shown in the example. A level in the hierarchical structure may be associated with a certain maintenance data category. For example, position:left corresponds to historic data, position:center may correspond to current data and position:right may correspond to future data. In the example, sections 191, 192 indicated by white dashed lines illustrated display areas which may be used for arranging the graphic representations according to their maintenance data categories (e.g., historic data in section 191 and future data in section 192). On a real display the white dashed lines may be invisible. The property position can have sub-properties, such as left, center, right, etc. Each of the sub-properties may have further sub-properties, such as bottom, center, top, etc. Another visualization property can be color. For example: data related to the past can have the property color:red. Depending on the date different shades or tones may be used. For example, graphic representation 184 may have the property color:red:dark and representation 182 may have the property color:red:light. In other words, color distinction can be used in a first hierarchy level of a rough distinction, and color intensity can be used is a second hierarchy level for a higher granularity. Any other visualization property may be used instead to support the user in distinguishing visually quickly various maintenance data categories. Visualization properties may also be used to indicate highly relevant information or urgent/emergency activities. For example, a blinking property or any other appropriate graphical animation property may be used.

The current task 189 of the user is represented in the center above the image 181. Future maintenance data/activities 185 to 188 are shown on the right to the image 181 wherein the next upcoming task 188 is displayed closest to the current task 189 and the task 187 which is most far into the future is at the right bottom. Presenting maintenance data in such a structured manner to the user supports a more efficient repair and maintenance execution by the user because an immediate overview of previous activities may impact the current activity and the current activity may have impact on future activities, which is immediately conceivable by the user. The user may even recognize that a task which is due for her in the very near future could also executed right now in combination with the current task, which a again helps to improve the efficiency and also the technical reliability of the performed repair and maintenance work in case of a dependency between the various tasks.

The person skilled in the art may select alternative arrangements for the maintenance data/activities achieving similar advantages for improving the efficiency and reliability of technical maintenance. For example, the historic data 182 to 184 (e.g., MD1 P, cf. FIG.3), could be arranged in a row beneath the image 181 of the flow controller wherein the most recent event could be shown on the left. The current activity 189 (e.g., MD1 C, cf. FIG.3) could be displayed next to the image 181 on the left and the future maintenance data/activities 185 to 188 (e.g., MD1F, cf. FIG. 3) could be displayed in a row above the image 181. In one embodiment, near future maintenance data/activities 188 which may be combinable with the current activity 189 may be positioned on the display to be quickly recognized by the user. In the example, maintenance data 188 may be displayed beneath the image 181 instead to attract the immediate attention of the user and trigger a corresponding evaluation. The visual output can be complemented or replaced by a respective audio context as elaborate earlier.

In other words, relevant context information is shown around the image 181 of the technical device. When the user changes the view direction of the camera, the graphic representations of the respective maintenance data can keep its relative position towards the image 181 of the technical device. When the technical device moves closes towards the edge of the display 170, the mobile device can automatically rearrange the graphic representations of the maintenance data by using a different layout pattern associated with the maintenance data categories. For example, when the image 181 moves towards the right edge of the display, the display mode may automatically switch as soon as the graphic representations 185 to 188 would not fit between the image 181 and the right edge of the display anymore. In this case, the mobile device may switch to a layout where the historic data is shown beneath the bottom, the current data to the left, and the future data above the top of the image 181. The current maintenance data (e.g., work order MD1 C) is supplemented with historical and future maintenance data (work orders MD1 P, MD1 F), safety observations and other events as an arc that surrounds the flow meter. This arrangement can be assembled automatically on the basis of the visualization properties associated with respective data maintenance categories as described above.

This builds a work context for the maintenance personnel. The previous safety observation in April was ok as well as cleaning operation in June, but a leak was detected yesterday. It should be noted that there will be another safety observation tomorrow and a valve is going to be changed in September.

Simulation of the future is also possible. For instance, if today's work order fully disables the flow meter, future safety observation would not be needed. Similarly, if the current bolt replacement work is cancelled because of missing bolts, the following valve change could take care of the bolt replacement since today's work is not critical. This context-related information can lead to optimization of preventive maintenance in the plant.

FIGs. 5, 6, 7 show further examples of displays of the mobile communication device according embodiments of the invention. The figures represent views of the past, present and the future in larger scale of the respective plant shown in the image date. In the example, a graphical interaction element 2011-07-Today-2011-09 (e.g., slider control) enables quick looks back and forward in time to get an overview of what has been happening and is going to happen in the displayed part of the plant. In the figures, these interaction elements are illustrated by labels such as "2011-07", "Today" and "-2011-09". For simplicity, the description uses the labels also as references.

In this embodiment, the arrangement of maintenance data around the respective images of technical device included in the image data can be actively influenced by the user when interacting with the graphical interaction element 2011-07-Today-2011-09. In the example, this graphical element has a movable graphical object (black bullet) which can be moved by the user through a gesture, such as touching the device and dragging the movable graphical object along the path indicated by the white bar of the graphical interaction element 2011-07-Today-2011-09. When the movable object is dragged to the "Today" position (as shown in FIG. 6) the current maintenance data (e.g., MD1C, MD2C, cf. FIG. 3) can be displayed next to the images of the respective devices. When moving the movable graphical object to the left (as shown in FIG. 5), that is, into the past, the respective historic maintenance data/activities can be displayed next to the images of the respective devices. When moving the movable graphical object to the right (as shown in FIG. 7), that is, into the future, the respective future maintenance data/activities can be displayed next to the images of the respective devices. That is, in this embodiment the maintenance data categories related to the timing of the respective maintenance data are reflected in the graphical interaction element, which acts as a filter function for the respective maintenance data category. Visualization properties, such as position or color, can still support the visual perception of the user when being associated with graphic representations of the maintenance data as described under FIG. 4. The advantage of the described filter function can be that in case of many graphic representations of maintenance data related to one technical device the display on a relatively small display of a mobile device can still be very clearly arranged and support the user to quickly spot the relevant information in the context of her current maintenance activity.

Other graphical interaction elements can be used by the skilled person to implement functionally equivalent user interaction with the mobile device. For example, a scrollbar or a dropdown list offering dates where relevant maintenance data is available, or any similar user interaction may be used instead or additionally. In other words, the graphical interaction element supports the user to efficiently apply appropriate filter conditions in the time dimension of the maintenance data.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

The present invention also comprises any combination of preferred embodiments as well as individual features and developments provided they do not exclude each other.

## Claims

1. A mobile phone (100) configured to identify a technical device for maintenance, comprising:
data indicating a view direction of the camera component at the time of generating the image data;
a data processing component (140) configured to compute spatial coordinates of an environment of the current location of the mobile phone (100);
a telecommunication component (160) configured to submit to a technical device database (200) a query for technical devices located in the environment and to receive from the technical device database (200), in response to the query, maintenance data for technical devices having location data matching the query;
the data processing component (140) further configured to associate the technical a camera component (110) configured to generate image data wherein the image data includes an image of the technical device;
a location sensor (120) configured to provide data for determining a current location of the mobile phone;
a direction sensor (130) configured to provide direction device with the image of the technical device using the direction data provided by the direction sensor (130) wherein the direction data indicates a view direction of the camera component (110) at the time of generating the image data; and
an output component (170) configured to display received maintenance data together with the image data wherein the received maintenance data is arranged to indicate that the received maintenance data relate to the technical device.

2. The mobile phone (100) of claim 1, further comprising:
a selection component configured to select a subset of the received maintenance data for being displayed by the output component (170) wherein the subset of the received maintenance data relates to a subset of technical devices being located in a viewing angle of the camera component at the time of generating the image data.

3. The mobile phone (100) of claim 2, wherein the selection component is configured to select (1650) such received maintenance data which is associated with such technical device having the shortest distance from the mobile phone.

4. The mobile phone (100) of claim 2, wherein the selection component is configured to select (1650) such received maintenance data which is associated with such technical device associated with an identifier received from the respective technical device.

5. The mobile phone (100) of claim 2, further comprising:
an image recognition component configured to apply an image recognition algorithm on images of technical devices for technical device identification, wherein the selection component is configured to select the maintenance data associated with the identified technical devices.

6. The mobile phone (100) of any one of the previous claims, further comprising:
a prefetch component configured to retrieve via the telecommunication component (160) maintenance data of technical devices for a plurality of potential environments of the mobile phone wherein the prefetch retrieval is independent from the current location of the mobile phone and the prefetched maintenance data is stored in the mobile phone for off-line operation.

7. The mobile phone (100) of any one of the previous claims, further comprising:
a filter component configured to filter the received maintenance data in accordance with a maintenance user profile stored on the mobile phone so that only the filtered maintenance data is displayed by the output component.

8. A method (1000) executed by a mobile phone (100) for identifying a technical device for maintenance, comprising:
determining (1200) a current location of the mobile phone based on data provided by a location sensor of the mobile phone;
computing (1300) spatial coordinates of an environment of the current location of the mobile phone;
submitting (1400) to a technical device database a query for technical devices located in the environment;
in response to the query, receiving (1500) maintenance data from the technical device database for technical devices having location data matching the query;
generating (1100) image data with a camera component of the mobile phone wherein the image data includes an image of the technical device;
associating (1600) the technical device with the image of the technical device using direction data provided by a direction sensor of the mobile phone wherein the direction data indicates a view direction of the camera component at the time of generating the image data; and
displaying (1700) on an output component of the mobile phone received maintenance data associated with the technical device together with the image data wherein the maintenance data is arranged to indicate that the maintenance data relate to the technical device.

9. The method of claim 8, wherein the image data includes a further image of a further technical device, further comprising:
selecting (1650) for the displaying step such received maintenance data which is associated with such technical device having the shortest distance from the mobile phone.

10. The method of claim 8, wherein the image data includes a further image of a further technical device, further comprising:
receiving (1610) an identifier of any one of the technical devices for which received maintenance data is available;
selecting (1620) for the displaying step such received maintenance data which is associated with such technical device associated with the identifier.

11. The method of claim 8, wherein the image data includes a further image of a further technical device, further comprising:
applying an image recognition algorithm on the image of the technical device and the further image of the further technical device to identify the technical devices; and
selecting for the displaying step the maintenance data associated with the identified technical devices, respectively.

12. The method of any one of the claims 8 to 11, wherein the maintenance data includes the maintenance data categories: historical maintenance data, present maintenance data, and future maintenance data.

13. The method claim 12, wherein the various maintenance data categories have distinguishable visualization properties.

14. The method of any one of the claims 8 to 13, wherein, prior to the displaying step, the selected maintenance data is filtered (1690) in accordance with a maintenance user profile stored on the mobile phone and only the filtered maintenance data is displayed.

15. A computer program product that when loaded into the memory of a mobile phone and executed by a processor of the mobile phone executes the steps of the computer implemented method according to of any one of the claims 8 to 14.
